# EUROPÄISCHE PATENTANMELDUNG

(11) **EP 1 690 471 A1**
(43) Veröffentlichungstag der Anmeldung: **16.08.2006**
(21) Anmeldenummer: 06101505.3
(22) Anmeldetag: 10.02.2006
(51) Int. Cl.: A47B 77/06, A47B 77/02

(54) **Küchenblock**

(30) Priorität: 11.02.2005 DE 202005002102 U
(71) Anmelder: Moser Möbeltechnik GmbH, 94110 Wegscheid (DE)
(72) Erfinder: Thaler, Jürgen, 94164, Sonnen (DE); Zillner, Georg, 94110, Wegscheid (DE)
(74) Vertreter: Gustorf, Gerhard

(57) **Zusammenfassung**

Bei einem Küchenblock mit einer Kochplatte (12) und einer daneben angeordneten Spüle (22) ist der Spüle (22) eine über die Kochplatte (12) schwenkbare Abdeckplatte (36) zugeordnet.

## Beschreibung

Die Erfindung betrifft einen Küchenblock mit einer Kochplatte und einer daneben angeordneten Spüle.

Derartige Küchenblöcke eignen sich insbesondere für Kleinküchen und Kochnieschen und werden vor allem in Campingwagen oder Booten eingebaut.

Da in den angegebenen Fällen der zur Verfügung stehende Raum sehr klein ist, besteht ein Bedürfnis, möglichst jeden Platz zur Unterbringung oder Ablage von Geschirr oder der gleichen auszunutzen.

Zur Lösung dieses Problems ist gemäß der Erfindung vorgesehen, daß der Spüle eine über die Kochplatte schwenkbare Abdeckplatte zugeordnet ist. Diese Lösung vereinigt zwei Vorteile in sich, da die Abdeckplatte in der ausgeschwenkten Position eine zusätzliche Abstellfläche für Geschirr zur Verfügung stellt, während sie in der eingeschwenkten Stellung über der Kochplatte diese überdeckt und damit dem gesamten Küchenblock in der Nichtgebrauchsstellung einen aufgeräumten Eindruck verleiht. Zudem steht in der Stellung über der gerade nicht benutzten Kochplatte die Abdeckplatte als zusätzliche Arbeitsebene oder Abstellfläche zur Verfügung.

Nach einer möglichen Ausgestaltung der Erfindung hat die Spüle ein gegenüber der Kochplatte erhöhtes Becken mit einem wenigstens teilweise kreisförmigen Rand, an den sich der kreissektorförmigen Rand an der Schmalseite der im wesentlichen rechteckigen Abdeckplatte anschließt, die in derselben Ebene wie der erhöhte Rand des Beckens liegt.

In Weiterbildung der Erfindung kann vorgesehen sein, daß die Abdeckplatte auf einem Stützorgan befestigt ist, das wenigstens eine um eine horizontale Achse frei drehbare Rolle aufweist, die auf einer kreisringförmigen Stützebene unterhalb des erhöhten Randes des Beckens abrollt. Damit wird eine leichtgängige Verschwenkbarkeit der Abdeckplatte gewährleistet.

Das Stützorgan kann aus wenigstens einer an der Unterseite der Abdeckplatte befestigten Stützstange bestehen, die im Bereich der Rolle in einen nach unten abgewinkelten Tragabschnitt für die Lagerung der Rolle übergeht.

Eine stabile Halterung für die Abdeckplatte in der Stellung über der Kochplatte wird dadurch gewährleistet, daß neben der von der Spüle abgewandten Seite der Kochplatte Abstützmittel für das freie Ende der Abdeckplatte befestigt sind.

Weitere Merkmale und vorteilhafte Ausgestaltungen der Erfindung ergeben sich aus den Schutzansprüchen und der folgenden Beschreibung von zwei Ausführungsbeispielen, die in der Zeichnung dargestellt sind. Es zeigen:
- Figur 1: die perspektivische Ansicht eines Küchenblocks mit ausgeschwenkter Abdeckplatte,
- Figur 2: eine der Figur 1 entsprechende Darstellung des Küchenblocks mit über die Kochplatte eingeschwenkter Abdeckplatte,
- Figur 3: in vergrößertem Maßstab eine perspektivische Teilansicht des Spülenbereichs bei geöffneter Tür des Unter- schrankes,
- Figur 4: eine der Figur 1 ähnliche Darstellung eines weiteren Ausführungsbeispiels,
- Figur 5: den Küchenblock der Figur 4 mit über die Kochplatte eingeschwenkter Abdeckplatte,
- Figur 6: die perspektivische Unteransicht der Abdeckplatte der Figuren 4 und 5,
- Figur 7: die Seitenansicht des Stützorgans mit Tragabschnitt und Korb gemäß Figur 6,
- Figur 8: eine Draufsicht auf die Einheit der Figur 7,
- Figur 9: eine der Figur 7 ähnliche Seitenansicht zur Darstellung der Lagerung und
- Figuren 10 und 11: zwei Perspektivdarstellungen des Stützorgans mit Tragabschnitt und Korb nach den Figuren 7 bis 9.

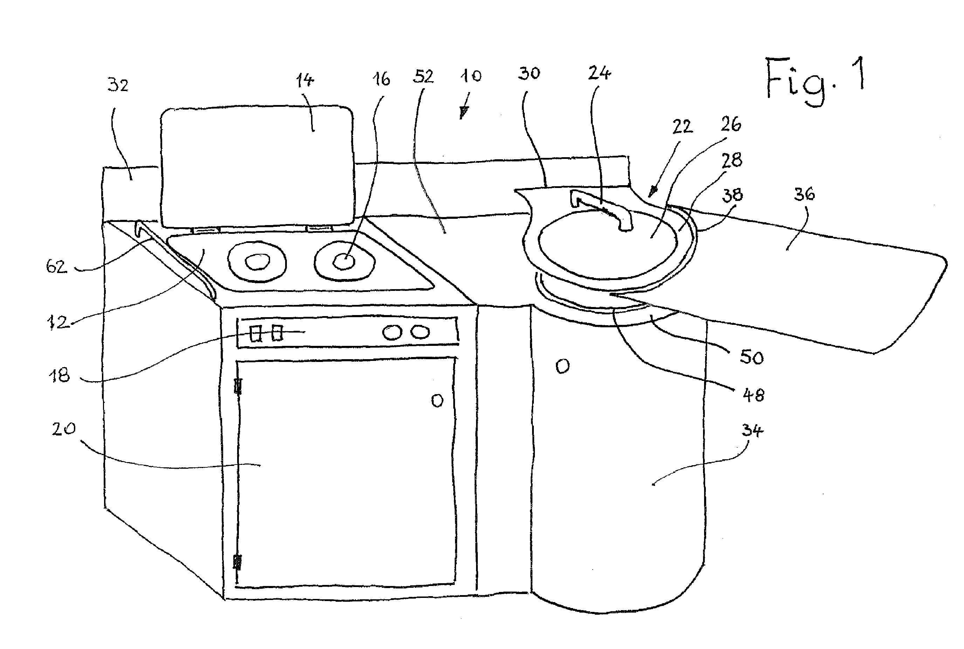

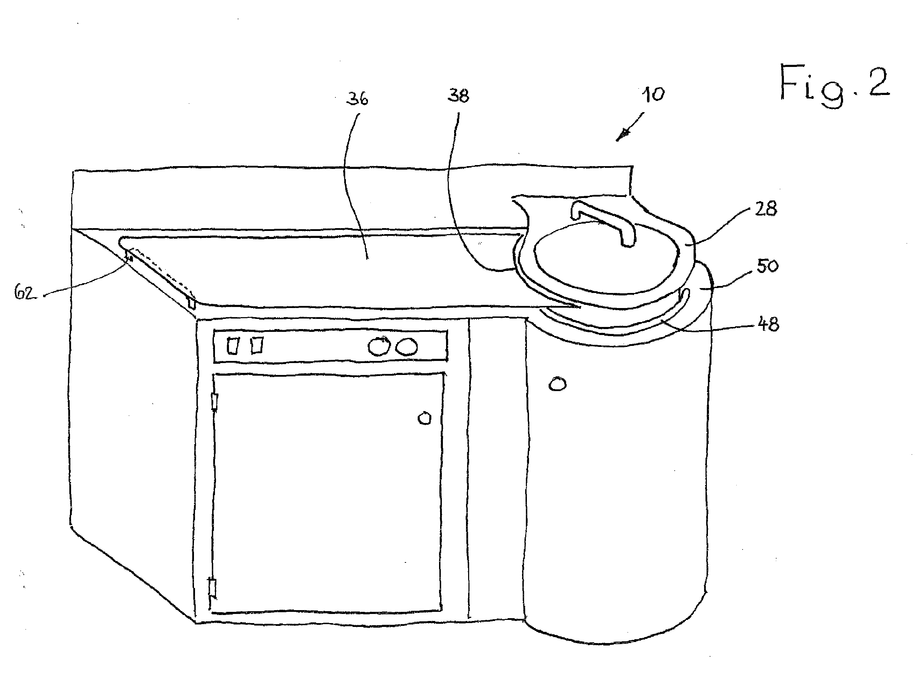

Die Figuren 1 und 2 zeigen einen Küchenblock 10, wie er beispielsweise in einen Campingbus eingebaut werden kann. Der Küchenblock 10 weist auf seiner linken Seite eine Kochplatte 12 auf, die durch eine Schwenkplatte 14 abgedeckt werden kann. Die Kochplatte 12 hat im dargestellten Ausführungsbeispiel zwei Kochstellen 16, die beispielsweise aus jeweils einem Gasbrenner bestehen. An der Frontseite ist in bekannter Weise ein Bedienpult 18 angebracht. Unterhalb der Kochplatte 12 ist ein Unterschrank 20 eingebaut, der in den meisten Fällen als Kühlschrank ausgebildet ist.

Neben der Kochplatte 12 weist der Küchenblock 10 eine Spüle 22 mit einem schematisch dargestellten Wasserzulauf 24 auf. Die Spüle 20 hat ein gegenüber der Kochplatte 12 erhöhtes, rundes Becken 26 mit einem teilweise kreisförmigen Rand 28, der an seiner geraden Rückseite 30 an einer Rückwand 32 des Küchenblocks 10 befestigt ist. Unter der Spüle 20 befindet sich ein weiterer Unterschrank mit einer gewölbten Tür 34, deren Wölbung dem kreisförmigen Rand 28 des Beckens 26 angepasst ist.

Gemäß der Erfindung ist der Spüle 22 eine Abdeckplatte 36 zugeordnet, die im dargestellten Ausführungsbeispiel im wesentlichen rechteckig ist. Die sich an den kreisförmigen Rand 28 des Beckens 26 anschließende Schmalseite der Abdeckplatte 36 hat ebenfalls die Form eines kreissektorförmigen Randes 38, dessen Radius demjenigen des kreisförmigen Randes 28 entspricht.

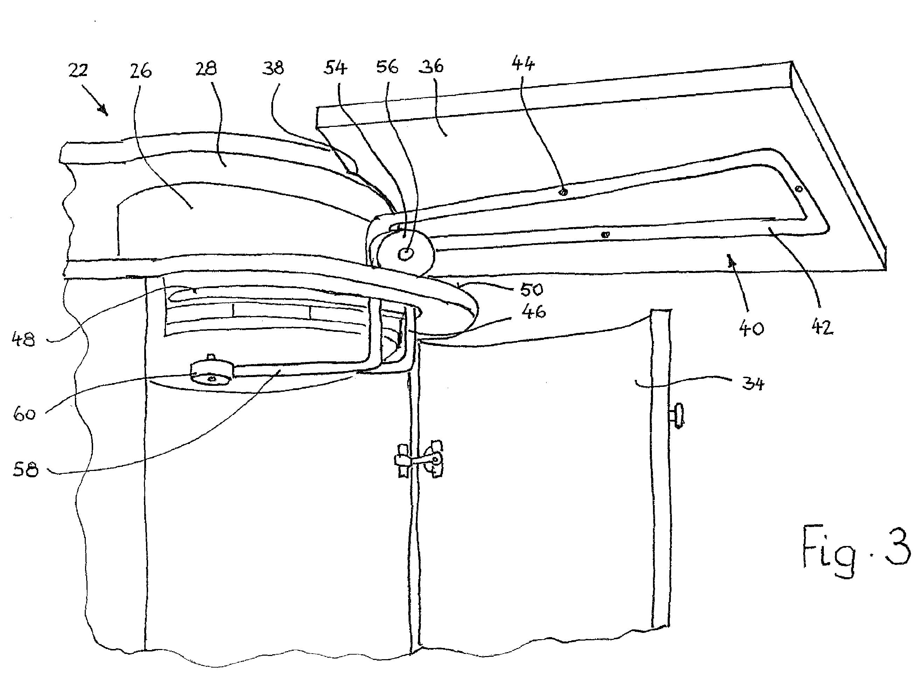

Wie Figur 3 zeigt, wird die Abdeckplatte 36 von einem Stützorgan 40 getragen, das im gezeigten Ausführungsbeispiel aus zwei nebeneinander verlaufenden Stützstangen 42 besteht, die am freien Schmalende der Abdeckplatte 36 miteinander verbunden sind. Die Stützstangen 42 sind mittels Schrauben 44 an der Unterseite der Abdeckplatte 36 befestigt. Im Bereich des kreisförmigen Randes 28 des Beckens 26 gehen die beiden Stützstangen 42 in jeweils einen nach vertikal unten abgewinkelten Tragabschnitt 46 über, der sich durch einen kreissektorförmigen Längsschlitz 48 erstreckt, welcher in eine Stützebene 50 eingearbeitet ist, die eine Verlängerung der Arbeitsebene 52 zwischen der Kochplatte 12 und der Spüle 22 darstellt. Die kreisringförmige Stützebene 50 unterhalb des erhöhten Randes 28 des Beckens 26 dient als Abrollfläche für eine frei drehbare Rolle 54 mit horizontaler Achse 56, die in nicht weiter dargestellter Weise im Bereich der vertikalen Tragabschnitte 46 des Stützorgans 40 befestigt ist.

Die nach unten abgewinkelten Tragabschnitte 46 der beiden Stützstangen 42 gehen in jeweils einen horizontal abgewinkelten Arm 58 über. Die freien Enden der beiden Arme 58 sind durch eine Drehscheibe 60 miteinander verbunden, die unterhalb des Beckens 26 um eine Vertikalachse schwenkbar gelagert ist.

Die Abdeckplatte 36 kann um die Vertikalachse der Drehscheibe 60 aus der Stellung der Figur 1, in der die Kochplatte 12 frei ist, in die Stellung der Figur 2 geschwenkt werden, in der diese die Kochplatte 12 vollständig überdeckt. Die Schwenkbewegung wird dabei durch die Rolle 54 unterstützt.

Wie die Figuren 1 und 2 zeigen, ist neben der von der Spüle 22 abgewandten Seite der Kochplatte 12 ein Abstützwinkel 62 in Form eines kopfstehenden U befestigt, auf dem das freie Ende der Abdeckplatte 36 in der Stellung der Figur 2 aufliegt.

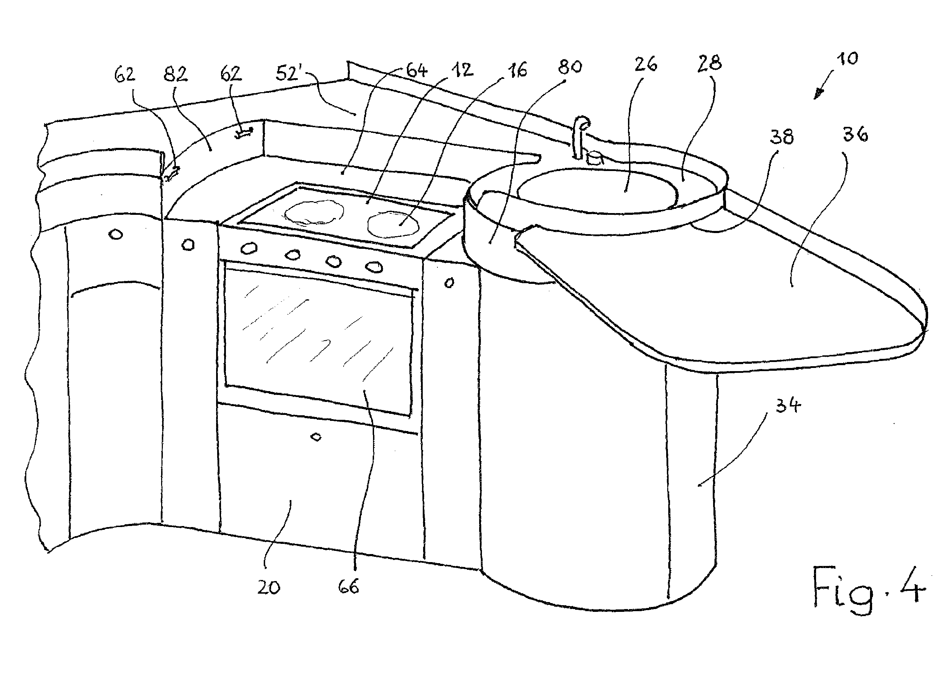

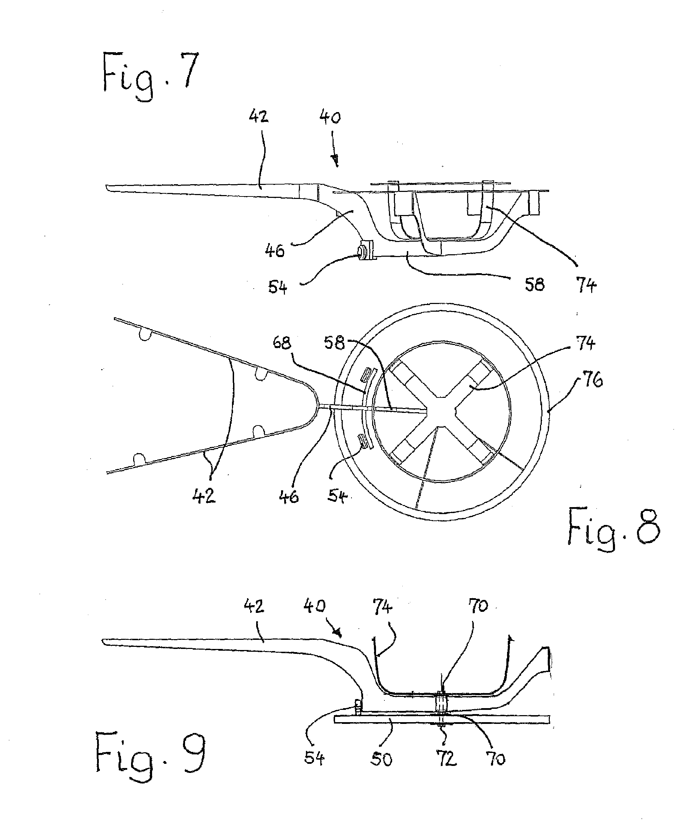

Bei der Variante der Figuren 4 bis 11 geht der das Becken 26 umschließende, gegenüber der Kochplatte 12 erhöhte Rand 28 in eine Arbeitsebene 52' über, die oberhalb der Kochplatte 12 liegt und durch eine Mulde 64 unterbrochen ist, die die Kochplatte 12 aufnimmt. Der unterhalb der Kochplatte 12 mit zwei elektrisch beheizten Kochstellen 16 eingebaute Unterschrank 20 nimmt bei diesem Ausführungsbeispiel einen Backofen 66 auf.

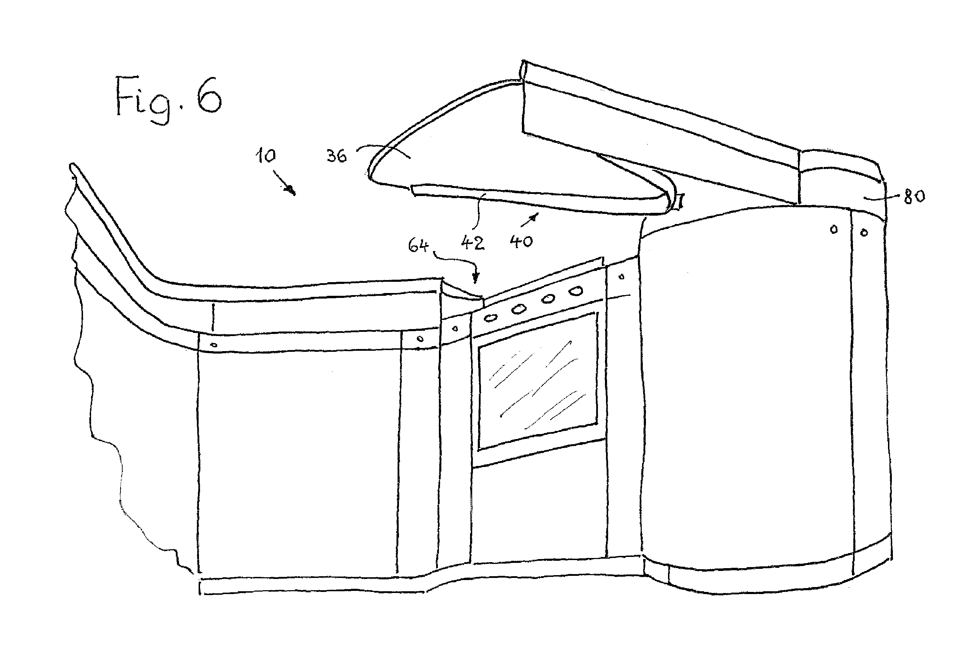

Wie insbesondere die Figuren 6 bis 11 zeigen, ist bei diesem Ausführungsbeispiel die Abdeckplatte 36 auf einem Stützorgan 40 befestigt, das aus zwei V-förmig zueinander stehenden Stützstangen 42 besteht, die im Scheitelbereich des V in den nach unten abgewinkelten Tragabschnitt 46 übergehen. An dem Tragabschnitt 46 ist eine Leiste 68 befestigt, an der die beiden Rollen 54 gelagert sind.

Der vom vertikalen Tragabschnitt 46 horizontal abgewinkelte Arm 58 des Stützorgans 40 ist über zwei Kugellager 70 drehbar an einem festen Bolzen 72 gelagert, dessen unteres Ende auf der Stützebene 50 befestigt ist, während am oberen Ende ein feststehender Korb 74 angebracht ist. Der Korb 74 dient zur Aufnahme des Beckens 26 der Spüle 22.

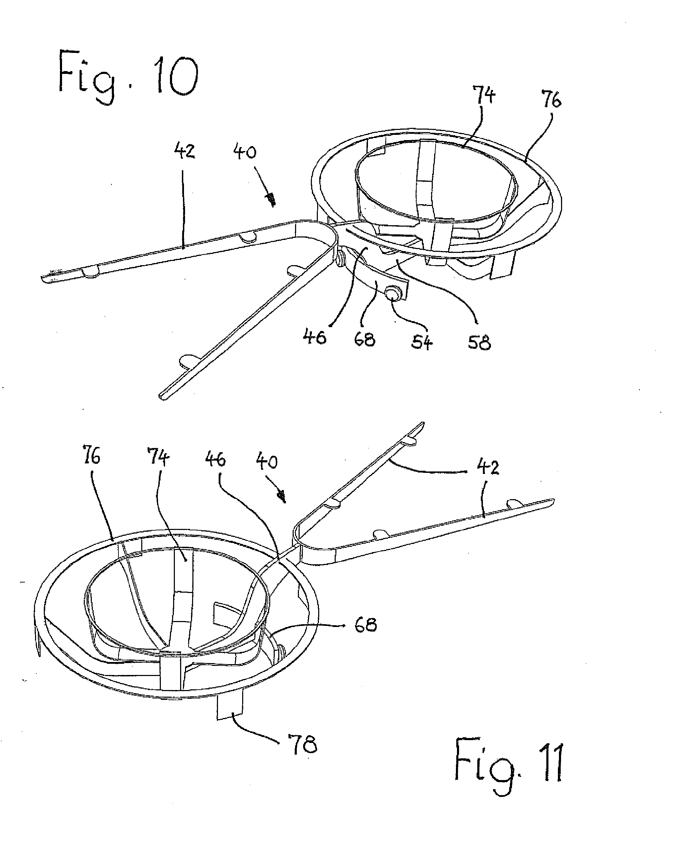

Die Figuren 10 und 11 zeigen, daß der horizontale Arm 58 sowohl im Bereich des vertikalen Tragabschnittes 46 als auch an seinem freien Ende an einem Ring 76 befestigt ist, der das Becken 26 umschließt. Von dem Ring 76 stehen Laschen 78 nach unten ab, an denen eine in den Figuren 4 bis 6 dargestellte, ringförmige Abdeckblende 80 befestigt ist.

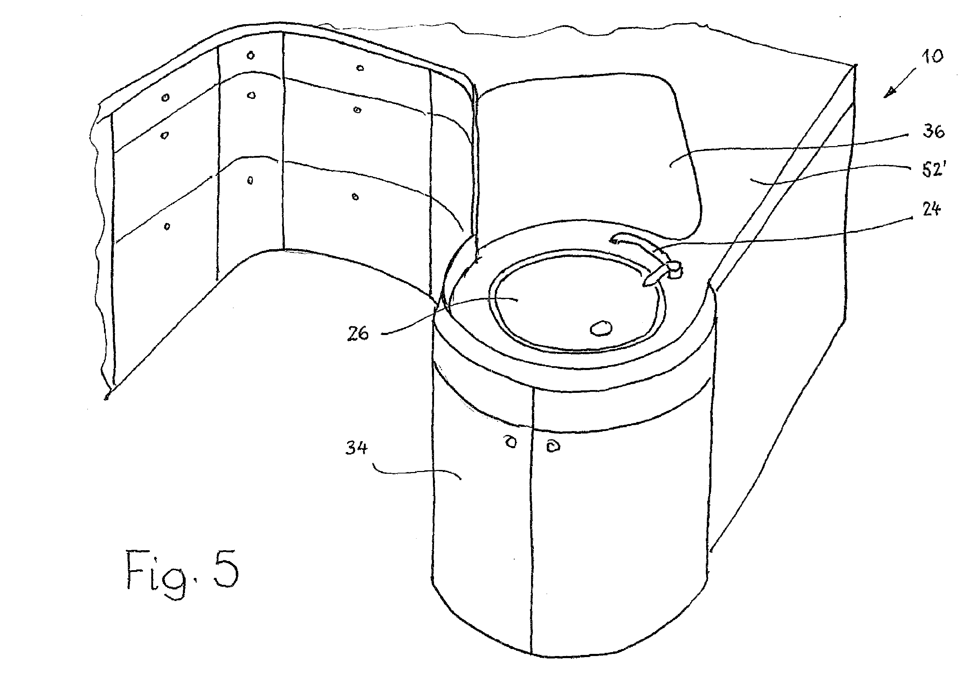

Im eingeschwenkten Zustand der Abdeckplatte 36 (Figur 5) schließt diese die Mulde 64 vollständig ab und stützt sich mit ihrem freien Rand auf Abstützelementen 62 ab, die an einer Seitenwand 82 der Mulde 64 angebracht sind.

## Patentansprüche

1. Küchenblock mit einer Kochplatte und einer daneben angeordneten Spüle, **dadurch gekennzeichnet, daß** der Spüle (22) eine über die Kochplatte (12) schwenkbare Abdeckplatte (36) zugeordnet ist.

2. Küchenblock nach Anspruch 1, **dadurch gekennzeichnet, daß** die Spüle (22) ein gegenüber der Kochplatte (12) erhöhtes Becken (26) mit einem wenigstens teilweise kreisförmigen Rand (28) hat, an den sich der kreissektorförmige Rand (38) an der Schmalseite der im wesentlichen rechteckigen Abdeckplatte (36) anschließt, die in derselben Ebene wie der erhöhte Rand (28) des Beckens (26) liegt.

3. Küchenblock nach Anspruch 2, **dadurch gekennzeichnet, daß** die Abdeckplatte (36) auf einem Stützorgan (40) befestigt ist, das wenigstens eine um eine horizontale Achse (56) frei drehbare Rolle (54) aufweist, die auf einer kreisringförmigen Stützebene (50) unterhalb des erhöhten Randes (28) des Beckens (26) abrollt.

4. Küchenblock nach Anspruch 3, **dadurch gekennzeichnet, daß** das Stützorgan (40) aus wenigstens einer an der Unterseite der Abdeckplatte (36) befestigten Stützstange (42) besteht, die im Bereich der Rolle (54) in einen nach unten abgewinkelten Tragabschnitt (46) für die Lagerung der Rolle (54) übergeht.

5. Küchenblock nach Anspruch 4, **dadurch gekennzeichnet, daß** der Tragabschnitt (46) in wenigstens einen horizontal abgewinkelten Arm (58) übergeht, der drehbar unterhalb des Beckens (26) gelagert ist.

6. Küchenblock nach Anspruch 5, **dadurch gekennzeichnet, daß** der Arm (58) an einem vertikalen Bolzen (72) gelagert ist, der am oberen Ende einen das Becken (26) aufnehmenden Korb (74) trägt.

7. Küchenblock nach Anspruch 5 oder 6, **dadurch gekennzeichnet, daß** der horizontale Arm (58) an einem das Becken (26) umschließenden Ring (76) befestigt ist, der eine ringförmige Abdeckblende (80) trägt.

8. Küchenblock nach einem der Ansprüche 4 bis 7, **dadurch gekennzeichnet, daß** sich der vertikale Tragabschnitt (46) durch einen kreissektorförmigen Längsschlitz (48) in der Stützebene (50) erstreckt.

9. Küchenblock nach einem der Ansprüche 2 bis 8, **dadurch gekennzeichnet, daß** der das Becken (26) umschließende Rand (28) in eine Arbeitsebene (52') übergeht, die oberhalb der Kochplatte (12) liegt und durch eine die Kochplatte (12) aufnehmende Mulde (64) unterbrochen ist.

10. Küchenblock nach einem der vorhergehenden Ansprüche, **dadurch gekennzeichnet, daß** neben der von der Spüle (22) abgewandten Seite der Kochplatte (12) Abstützmittel (62) für das freie Ende der Abdeckplatte (36) befestigt sind.
